# EUROPEAN PATENT SPECIFICATION

(11) **EP 1 473 495 B1**
(45) Date of publication and mention of the grant of the patent: **07.02.2007**
(21) Application number: 04076217.1
(22) Date of filing: 22.04.2004
(51) Int. Cl.: F16K 24/04

(54) **Float for automatic bleeder valve and valve with said float**
Schwimmer für automatisches Entlüftungsventil und Ventil mit dem Schwimmer
Flotteur pour vanne d'aération automatique et vanne avec un tel flotteur

(30) Priority: 28.04.2003 IT MI20030847
(43) Date of publication of application: 03.11.2004
(73) Proprietor: WATTS INDUSTRIES ITALIA S.r.l., Bolzano (IT)
(72) Inventor: Molinari, Roberto, Trento (IT)
(74) Representative: Raimondi, Margherita

(56) References cited:
- EP-A- 0 854 310
- EP-A- 1 016 813
- WO-A-02/074571
- US-A- 5 950 659

## Description

The present invention relates to an automatic valve assembly with float, for bleeding fluid recirculating systems.

It is known in the technical sector of fluid recirculating systems, such as hydraulic systems, in particular hydro/thermo/sanitary systems, that there exists the need to provide automatic valves for bleeding the air which accumulates inside the said system; said valves are generally mounted at the highest points or at suitable points within the system. For this purpose automatic bleeder valves have been designed, essentially comprising an upper cap having, associated therewith, a bleeder valve which is opened/closed by a lever connected to a float which moves up and down with the free surface of the fluid present inside a bowl coaxially joined in a sealed manner to the cap and connected to the system, the level of the said free surface of the fluid being in turn determined by the presence of a greater or smaller quantity of air in the system.

Since it is required, however, that said valves, in addition to being connected directly to the system, must be able to be housed, for example, in special seats provided in the recirculation pumps, constructional forms have been developed without the bowl, the function of which is instead performed directly by said valve seats.

The elimination of the bowl, however, poses a further problem consisting in the fact that the float is no longer housed inside a container and may come loose and/or be damaged during handling and/or transportation, resulting in the entire valve being unusable.

In order to solve this problem, valves, for example disclosed in IT 0,237,091, have been developed, said valves being equipped with an element for protecting the float in the form of a basket with a bottom transverse part for connecting the side walls of the said basket.

Although performing its function, this basket has, however, the drawback that it consists of a separate part to be associated with the cap during assembly, with a consequent increase in the associated production and storage costs; in addition to this, the basket in turn constitutes a delicate part exposed to knocks and breakages.

Further prior art according to the preamble of the independent claim is disclosed into US 5,950,659, EP 0 854 310 and WO 02/074571.

The technical problem which is posed, therefore, is that of designing a bleeder valve assembly with float for fluid recirculating systems, in particular hydraulic systems, provided with means for supporting the float which are not exposed to knocks and/or breakages and which may at the same time form means for guiding the float so as to prevent misalignment of the latter with consequent malfunctioning of the valve.

In connection with this problem a further requirement is that these means should have small dimensions and be easy and inexpensive to manufacture.

These results are obtained according to the present invention by an automatic air bleeding assembly according to the characteristic of claim 1.

Further details may be obtained from the following description of a non-limiting example of embodiment of the present invention, provided with reference to the accompanying drawings in which:
- Figure 1 shows an exploded view of a valve according to the present invention;
- Figure 2 shows a perspective view of a valve according to the present invention;
- Figure 3a shows a cross-section along a vertical plane of the valve shown in Fig. 2, with the float in the lowered position;
- Figure 3b shows a schematic cross-section similar to that of Fig. 3a, with the float in the raised position;
- Figure 4 shows a cross-section along the plane indicated by IV-IV in Fig. 3;
- Figure 5 shows a schematic cross-section along a vertical plane of the valve inserted in its seat and in the sealed condition;
- Figure 6a shows a partial cross-section similar to that of Fig. 5 with the valve in the bleeding condition;
- Figure 6b shows a further schematic cross-section through the valve according to Fig. 5;
- Figure 7a shows a perspective view of a second embodiment of the valve according to the present invention;
- Figure 7b shows a schematic cross-section along a vertical plane of the valve according to Fig. 7a;
- Figure 8 shows a top plan view of a further example of embodiment of a valve according to the present invention with manual bleeding means;
- Figure 9a shows a cross-section along the plane indicated by IX-IX in Fig. 8 with manual bleeding in the rest condition; and
- Figure 9b shows a cross-section along the plane indicated by IX-IX in Fig. 8 with manual bleeding activated.

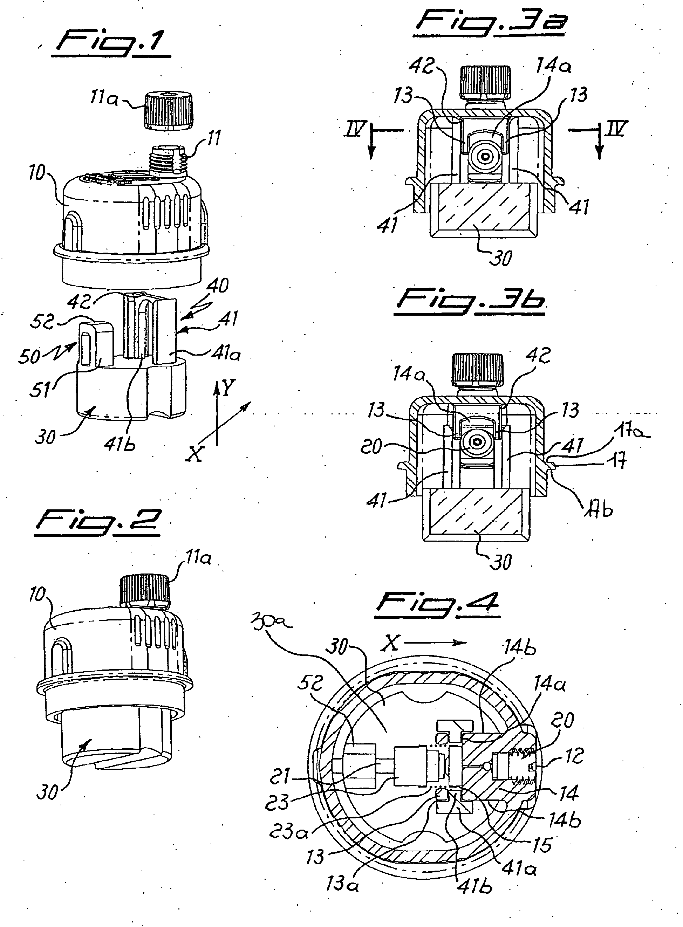

As illustrated and referring to a Cartesian reference system formed by a transverse/horizontal axis X-X and an axial/vertical axis Y-Y, assumed conventionally for the sake of convenience of the description, the valve according to the present invention essentially consists of a cap 10 shaped so as to have: a duct 11, substantially parallel to the vertical axis and able to be shut off by a screw-type closing stopper 11a, and a duct 12 which is substantially horizontal (Fig. 4), passing through both the cap 10 and a step 14 with an internal front surface 14a, formed inside the cap 10 and able to allow insertion of the bleeder valve 20.

The sides of the step 14 parallel to the transverse direction X-X are provided with bearing surfaces 14b arranged on opposite sides of the opening of the duct 12.

The cap 10 is also provided internally with longitudinal guides 13 arranged parallel to the said front surface 14a and at a suitable distance therefrom in the transverse direction so as to form a cavity 15, the purpose of which will become obvious below.

Said valve 20 is of the conventional type which can be opened/closed by mean of a lever 21, a first end of which is joined to the sealing element 23 axially retained by a spring 23a and the other end of which is connected to a float 30 which is free to travel in both senses longitudinally between the two - top and bottom - end-of-travel positions which are respectively defined by the upper floating limit on the water (the float strikes the inside of the cap 10) and by guiding and retaining means described below.

In greater detail the float 30 has two bridge elements 40 and 50 which are arranged in a position substantially aligned in the transverse direction X-x and extending, in the preferred example illustrated, with different heights in the axial direction Y-Y.

The first bridge element 40 has uprights 41 with a cross-section substantially in the form of a "T", the head 41a of which is able to be arranged with its internal surfaces bearing against the corresponding surfaces of the uprights 13 and the surfaces 14b of the step 14 in the cap 10; the shank 41b of the "T" is instead able to be inserted inside the cavity 15 present between the longitudinal guides 13 and the internal front surface 14a of the step 14.

In the preferred embodiment illustrated, the transverse element 42 of the bridge element 40 has a width corresponding to that of the shank of the "T" so as to be able to pass into said cavity 15 of the cap 10 and facilitate movement of the float without sticking.

The second bridge element 50 has uprights 51 and a cross-piece 52 which are substantially smooth.

Assembly of the valve is performed as follows:
- the cap 10 is prepared;
- the float 30 is inserted axially inside it with the bridge elements 40 and 50 directed towards the inside of the cap and with
- the head part 41a of the T-shaped uprights 41 inserted in contact with the respective surfaces of the uprights 13 and the surface 14b of the step 14;
- once the end-of-travel position has been reached in the axial direction, the float 30 has the opening of the bridge elements 40 and 50 aligned with the opening of the duct 12;
- insertion of the valve 20 in the transverse direction produces insertion of a valve part underneath the bridge element 40 and the end of the lever 21 underneath the bridge element 50.

In a preferred embodiment it is envisaged moreover that the cap 10 has an annular edge 17 which projects outwards and the top surface 17a and bottom surface 17b of which are respectively able to form the bearing surface of means 70a for constraining the valve to the associated seat 80 which is only schematically shown in the figures and of a sealing element 70b for example an O-ring.

These constraining means 70a are preferably of the rapid-engagement type and consist of a resilient U-shaped fork which can be inserted into special locating recesses 81 formed in the said seat 80 for the valve.

Alternatively it is envisaged that the system for engagement between cap and seat may of the screw/female thread type. During operation of the valve illustrated in Figs. 5,6a and 6b:
- in normal operating conditions (Fig. 5) the float 30 is raised, being pushed by the water;
- as a result the lever 21 is recalled by the spring 23a into the position for closing the bleeder;
- if the quantity of air in the fluid increases, the float tends to move downwards (Fig. 6a) in the axial direction; and
- the second bridge element 50 bears (Fig. 6a) against the end of the lever 21, causing rotation thereof in the anti-clockwise direction resulting in opening of the bleeder;
- during its travel in the axial direction the float is guided by the longitudinal guides 13, by the surfaces 14a and 14b of the step 14 and by the uprights 41 of the first bridge element 40;
- the float is nevertheless prevented from becoming detached from the cap 10 by the interfering action of the cross-piece 42 of the first bridge element 40 with the valve 20 which prevents it from coming out completely in the axial direction, making contact with the said cross-piece.

It is envisaged moreover that the bridge element 40 may have uprights 41 with a different cross-section, for example a rectangular or circular cross-section.

Figs. 7a and 7b show a variation of embodiment of a valve with float according to the present invention; in this configuration bleeding 111,111a of the valve is performed in a direction parallel to that of the duct 12 for inserting the valve 120.

In addition to this it is envisaged that the elements interfering with the valve 120 may consist of a hollow polygonal element 140, 150 supported by a single upright 141,151.

Said polygonal element may be closed, as shown, or open, for example in form of a hook.

The said retaining action is therefore provided solely by elements integral with the float in conjunction with functional means of the valve, without the need for further additional parts designed for this purpose.

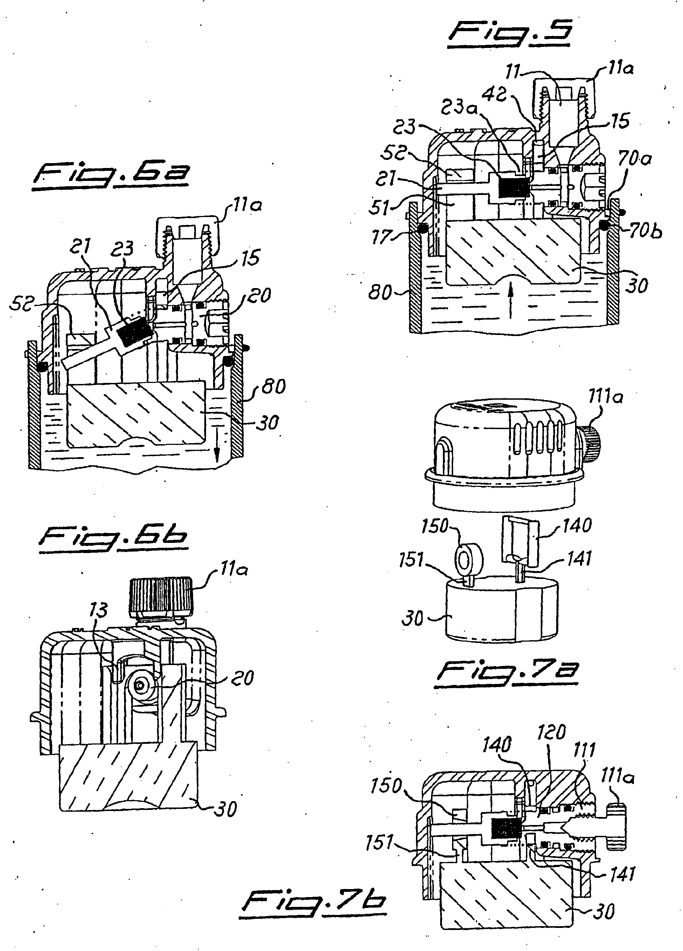

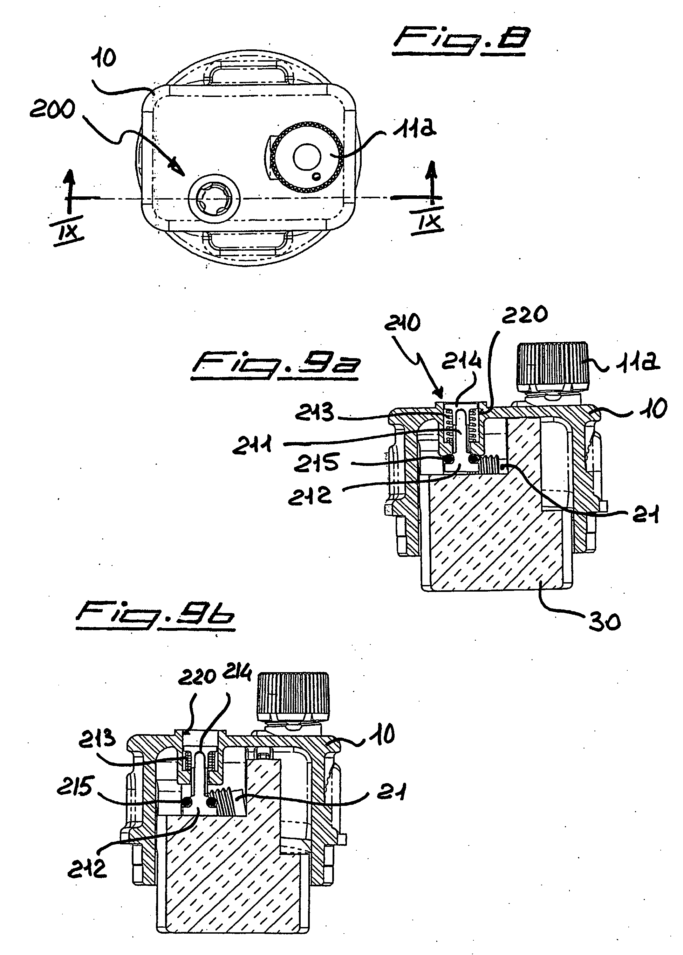

In addition to this, the float is prevented from rotating about itself and/or from being inclined, thereby eliminating the drawbacks resulting from sticking and consequent malfunctioning of the bleeder. Figures 8,9a,9b show a further embodiment of the valve according to the present invention which envisages also means 200 for manually bleeding the air which are useful when filling the system or in the event of malfunctioning of the automatic device controlled by the float 30.

Said means 200 comprise an obturator 210 which is formed by a shank 211 and by a base 212; the shank 211 is housed inside a corresponding open seat 220 able to connect the interior of the cap 10 with the external environment, while the base 212 has a surface such as to bear against the inside edge of said seat 220 in order to produce closing thereof, as will emerge more clearly below.

A spring 213 is arranged coaxially with the shank 211, said spring being able to exert a thrusting action between a bearing surface of the seat 220 and a head-piece 214 joined to the shank 211 on the opposite side to the base 212.

In this way:
- in the rest condition (Fig. 9a) the spring 213 pushes the obturator 210 outwards so that the base 212 bears against the inside edge of the seat 220 so as to close it;
- if required (Fig. 9b) it is possible to exert an axial thrust against the head-piece 214 so as to overcome the reaction of the spring 213 and cause displacement of the obturator towards the inside of the cap in order to obtain opening of the seat 220 and a downwards thrust on the lever 21 able to activate bleeding of the air which occurs along the normal path 11 and/or the seat 210 itself.

In a preferred embodiment a sealing element 215 of the O-ring type is arranged between the base 212 of the obturator 200 and inside edge of the seat 210.

## Claims

1. Automatic air bleeder valve assembly for fluid recirculating systems, comprising a cap (10) having bleeding means (11, 20, 21; 111; 120) for bleeding the air present in the system, the bleeding means (11,20,21;111;120) comprising a bleeder valve (20;120) and its actuating element (21) and a float (30) movable in an axial direction (Y-Y), able to float on the free surface of the fluid and connected to said bleeding means (11,20,21;111,120) so as to open and close them, wherein said float (30) has at least one first element (40;140) and one second element (50; 150) extending in the axial direction (Y-Y) and able to interfere axially with said bleeding means (11,20,21;111,120) **characterized in that** said cap (10) presents internally a step (14) with a duct (12) passing there through and extended along a transverse direction (X-X) to allow the insertion of the bleeder valve (20), the float (30) being prevented from becoming detached from the cap (10) by the interfering action of first element (40;140) with the bleeder valve (20).

2. Valve assembly according to Claim 1, **characterized in that** said first interfering element (40;140) and second interfering element (50;150) are arranged in a position mutually aligned along the transverse direction (X-X) and able to allow insertion inside them, in the same transverse direction (X-X), of the actuating element (21) for opening/closing the valve.

3. Valve assembly according to Claim 1, **characterized in that** said first interfering element consists of a polygonal element (140) which is internally hollow and supported by an upright (141) joined to the float (30).

4. Valve assembly according to Claim 1, **characterized in that** said first interfering element consists of a bridge element (40).

5. Valve assembly according to Claim 1, **characterized in that** said first element (40; 140) has a height greater than that of said second element (50;150).

6. Valve assembly according to claim 1, **characterized in that** said second interfering element consists of a polygonal element (150) which is internally hollow and supported by an upright (151) joined to the float (30).

7. Valve assembly according to Claim 1, **characterized in that** said second interfering element (50) consists of a bridge element.

8. Valve assembly according to claim 1, **characterized in that** said step has a front inside surface (14a) which is normal to the transverse direction (X-X) and surfaces (14b) which are parallel to plane formed by the transverse (X-X) and axial (Y-Y) directions and arranged on opposite sides of the opening of the duct (12) housing the valve (20).

9. Valve assembly according to Claim 8, **characterized in that** the cap (10) is provided internally with axial guides (13) arranged parallel to the said front surface (14a) of the step (14) and at a suitable distance therefrom in the transverse direction so as to form a cavity (15).

10. Valve assembly according to Claim 4, **characterized in that** said first bridge element (40) has uprights (41) with a substantially T-shaped cross-section.

11. Valve assembly according to Claim 4, **characterized in that** said first bridge element (40) has uprights (41) with a substantially rectangular cross-section.

12. Valve assembly according to Claim 4, **characterized in that** said first bridge element (40) has uprights (41) with a substantially circular cross-section.

13. Valve assembly according to Clam 4, **characterized in that** said first bridge element (40) has a cross-piece (42) with a width in the transverse direction (X-X) slightly smaller than the width of said cavity (15) inside which the cross-piece is able to slide in the axial direction (Y-Y).

14. Valve assembly according to Claim 2, **characterized in that** said cross-piece (42) of the first bridge element (40) is able to bear against said valve (20) during its displacement inside the cavity (15).

15. Valve assembly according to Claim 7, **characterized in that** the cross-piece (52) of said second bridge element (50) is able to interfere with the actuating element (21) of the valve piece (20) so as to open the latter.

16. Valve assembly according to claim 1, **characterized in that** said cap (10) has an annular edge (17) which projects outwards and the top surface (17a) and bottom surface (17b) of which are respectively able to form the bearing surface of means (70a) for constraining the valve to the associated seat (80) and a sealing element (70b) .

17. Valve assembly according to claim 16, **characterized in that** said means (70a) for constraining the valve to the associated seat (80) consist of a U-shaped resilient fork.

18. Valve assembly according to claim 16, **characterized in that** said sealing element (70b) is of the O-ring type.

19. Valve assembly according to claim 1, **characterized in that** said bleeding means (11) are parallel to the axial direction (Y-Y) of movement of the float (30).

20. Valve assembly according to claim 1, **characterized in that** said bleeding means (111) are parallel to the transverse direction (X-X) of movement of the float (30).

21. Valve assembly according to Claim 1, **characterized in that** it comprises means (200) for manually bleeding the air.

22. Valve assembly according to Claim 21, **characterized in that** said manual bleeding means (200) comprise an obturator (210) formed by a shank (211) and a base (212), said shank (211) being housed in a corresponding open seat (220) able to connect the interior of the cap (10) with the external environment.

23. Valve assembly according to Claim 22, **characterized in that** said base (212) has a surface such as to bear against the inside edge of said seat (220) so as to produce closing thereof.

24. Valve assembly according to claim 2, **characterized in that** a spring (213) is arranged coaxially with the shank (211) of the obturator (210) and is able to exert a thrusting action between a bearing surface of the seat (220) and a head piece (214) joined to the shank (211) on the opposite side to the base (212).

25. Valve assembly according to claim 23, **characterized in that** a sealing element (215) of the O-ring type is arranged between the base (212) of the obturator (200) and the inside edge of the seat (210).

## Patentansprüche

1. Automatische Entlüftungs-Ventilanordnung für Fluid-Zirkulationssysteme, mit einem Deckel (10), der Entlüftungseinrichtungen (11, 20, 21; 111; 120) zum Entlüften der in dem System vorhandenen Luft aufweist, wobei die Entlüftungseinrichtung (11, 20, 21; 111; 120) ein Entlüftungsventil (20; 120) und dessen Betätigungselement (21) sowie einen Schwimmer (30) aufweist, der in einer axialen Richtung (Y-Y) bewegbar ist und fähig ist, auf der freien Oberfläche des Fluids zu schwimmen und der mit der Entlüftungseinrichtung (11, 20, 21; 111; 120) verbunden ist, um diese zu öffnen und zu schließen, wobei der Schwimmer (30) zumindest ein erstes Element (4; 140) und ein zweites Element (50; 150) aufweist, die sich in der axialen Richtung (Y-Y) erstrecken und fähig sind, axial in die Entlüftungseinrichtung (11, 20, 21; 111, 120) einzugreifen, **dadurch gekennzeichnet, dass** der Deckel (10) einen innen liegenden Ansatz (14) mit einer Leitung (12) aufweist, die durch diesen hindurch läuft und sich entlang einer Querrichtung (X-X) erstreckt, um das Einfügen des Entlüftungsventils (20) zu erlauben, wobei der Schwimmer (30) von einer Trennung von dem Deckel (10) durch die eingreifende Aktion des ersten Elementes (40; 140) in das Entlüftungsventil (20) gehindert wird.

2. Ventilanordnung nach Anspruch 1, **dadurch gekennzeichnet, dass** das erste eingreifende Element (40; 140) und das zweite eingreifende Element (50; 150) gegenüber liegend in einer Position längs der Querrichtung (X-X) derart ausgerichtet sind, um das Einfügen des Betätigungselements (21) zwischen diesen in der gleichen Querrichtung (X-X) zum Öffnen/Schließen des Ventils zu ermöglichen.

3. Ventilanordnung nach Anspruch 1, **dadurch gekennzeichnet, dass** das erste eingreifende Element aus einem polygonalen Element (140) besteht, dass innen hohl und durch einen mit dem Schwimmer (30) verbundenen Ständer (141) abgestützt ist.

4. Ventilanordnung nach Anspruch 1, **dadurch gekennzeichnet, dass** das erste eingreifende Element aus einem Brückenelement (40) besteht.

5. Ventilanordnung nach Anspruch 1, **dadurch gekennzeichnet, dass** das erste Element (40; 140) eine Höhe aufweist, die größer als die des zweiten Elements (50; 150) ist.

6. Ventilanordnung nach Anspruch 1, **dadurch gekennzeichnet, dass** das zweite eingreifende Element aus einem polygonalen Element (150) besteht, dass innen hohl und durch einen mit dem Schwimmer (30) verbundenen Ständer (151) abgestützt ist.

7. Ventilanordnung nach Anspruch 1, **dadurch gekennzeichnet, dass** das zweite eingreifende Element (50) aus einem Brückenelement besteht.

8. Ventilanordnung nach Anspruch 1, **dadurch gekennzeichnet, dass** der Ansatz eine vordere innere Oberfläche (14a), die senkrecht zu der Querrichtung (X-X) ist, und Oberflächen (14b) aufweist, die parallel zu einer durch die Querrichtung (X-X) und die axiale Richtung (Y-Y) gebildeten Ebene sind und auf gegenüberliegenden Seiten der Öffnung der das Ventil (20) aufnehmenden Leitung (12) angeordnet sind.

9. Ventilanordnung nach Anspruch 8, **dadurch gekennzeichnet, dass** der Deckel (10) intern mit axialen Führungen (13) versehen ist, die parallel zu der vorderen Oberfläche (14a) des Ansatzes (14) und in einer geeigneten Entfernung hiervon in der Querrichtung angeordnet sind, um einen Hohlraum (15) zu bilden.

10. Ventilanordnung nach Anspruch 4, **dadurch gekennzeichnet, dass** das erste Brückenelement (40) Ständer (41) mit einem im Wesentlichen T-förmigen Querschnitt aufweist.

11. Ventilanordnung nach Anspruch 4, **dadurch gekennzeichnet, dass** das erste Brückenelement (40) Ständer (41) mit einem im Wesentlichen rechteckigen Querschnitt aufweist.

12. Ventilanordnung nach Anspruch 4, **dadurch gekennzeichnet, dass** das erste Brückenelement (40) Ständer (41) mit einem im Wesentlichen kreisförmigen Querschnitt aufweist.

13. Ventilanordnung nach Anspruch 4, **dadurch gekennzeichnet, dass** das erste Brückenelement (40) ein Querstück (42) mit einer Breite in der Querrichtung (X-X) aufweist, die geringfügig kleiner als die Breite des Hohlraumes (15) ist, innerhalb dem das Querstück in der axialen Richtung (Y-Y) gleiten kann.

14. Ventilanordnung nach Anspruch 12, **dadurch gekennzeichnet, dass** das Querstück (42) des ersten Brückenelementes (40) fähig ist, während seiner Verschiebung innerhalb des Hohlraumes (15) gegen das Ventil (20) anzuschlagen.

15. Ventilanordnung nach Anspruch 7, **dadurch gekennzeichnet, dass** das Querstück (52) des zweiten Brückenelementes (50) ausgebildet ist, um in das Betätigungselement (21) des Ventilstücks (20) einzugreifen, um das letztere zu öffnen.

16. Ventilanordnung nach Anspruch 1, **dadurch gekennzeichnet, dass** der Deckel (10) einen ringförmigen Rand (17), der nach außen ragt und dessen obere Oberfläche (17a) und untere Oberfläche (17b) jeweils die Anschlagfläche einer Einrichtung (70a) bilden, um das Ventil in den zugeordneten Sitzen (80) zu bewegen, und ein Dichtelement (70b) aufweist.

17. Ventilanordnung nach Anspruch 16, **dadurch gekennzeichnet, dass** die Einrichtung (70a) zum Bewegen des Ventils in den zugeordneten Sitz (80) aus einer U-förmigen nachgiebigen Gabel besteht.

18. Ventilanordnung nach Anspruch 16, **dadurch gekennzeichnet, dass** das Dichtelement (70b) vom O-Ring-Typ ist.

19. Ventilanordnung nach Anspruch 1, **dadurch gekennzeichnet, dass** die Entlüftungseinrichtung (11) parallel zu der axialen Richtung (Y-Y) der Bewegung des Schwimmers (30) ist.

20. Ventilanordnung nach Anspruch 1, **dadurch gekennzeichnet, dass** die Entlüftungseinrichtung (111) parallel zu der Querrichtung (X-X) der Bewegung des Schwimmers (30) ist.

21. Ventilanordnung nach Anspruch 1, **dadurch gekennzeichnet, dass** sie eine Einrichtung (200) zur manuellen Entlüftung der Luft aufweist.

22. Ventilanordnung nach Anspruch 21, **dadurch gekennzeichnet, dass** die manuelle Entlüftungseinrichtung (200) ein Absperrorgan (210) aufweist, das durch einen Schaft (211) und eine Basis (212) gebildet ist, wobei der Schaft (211) in einem entsprechenden offenen Sitz (220) aufgenommen ist, um den Innenraum des Deckels (10) mit der äußeren Umgebung zu verbinden.

23. Ventilanordnung nach Anspruch 22, **dadurch gekennzeichnet, dass** die Basis (212) eine Oberfläche aufweist, die gegen den inneren Rand des Sitzes (220) anschlagen kann, um dessen Schließen zu veranlassen.

24. Ventilanordnung nach Anspruch 22, **dadurch gekennzeichnet, dass** eine Feder (213) koaxial mit dem Schaft (211) des Absperrorgans (210) angeordnet und derart ausgebildet ist, um eine Druckaktion zwischen einer Anschlagoberfläche des Sitzes (220) und einem Kopfstück (214), das auf der gegenüber liegenden Seite der Basis (212) mit dem Schaft (211) verbunden ist, auszuüben.

25. Ventilanordnung nach Anspruch 23, **dadurch gekennzeichnet, dass** ein Dichtelement (215) vom O-Ring-Typ zwischen der Basis (212) des Absperrorgans (200) und dem inneren Rand des Sitzes (210) angeordnet ist.

## Revendications

1. Ensemble formant robinet purgeur d'air automatique pour systèmes de recirculation de fluides, comprenant un capot (10) ayant des moyens de purge (11, 20, 21 ; 111 ; 120) pour purger l'air présent dans le système, les moyens de purge (11, 20, 21 ; 111 ; 120) comprenant un robinet purgeur (20 ; 120) et son élément d'actionnement (21) ainsi qu'un flotteur (30) mobile dans une direction axiale (Y - Y), pouvant flotter sur la surface libre du fluide et accouplés auxdits moyens de purge (11, 20, 21 ; 111 ; 120) de façon à les ouvrir et les fermer, ledit flotteur (30) ayant au moins un premier élément (40 ; 140) et un deuxième élément (50 ; 150) qui s'étendent dans la direction axiale (Y - Y) et qui peuvent interagir axialement avec lesdits moyens de purge (11, 20, 21 ; 111 ; 120), **caractérisé en ce que** ledit capot (10) présente en interne une marche (14) traversée par un conduit (12) et qui s'étend le long d'une direction transversale (X - X), pour permettre l'insertion du robinet purgeur (20), le flotteur (30) étant empêché de se détacher du capot (10) par l'interaction du premier élément (40 ; 140) avec le robinet purgeur (20).

2. Ensemble formant robinet selon la revendication 1, **caractérisé en ce que** ledit premier élément d'interaction (40 ; 140) et ledit deuxième élément d'interaction (50 ; 150) sont positionnés de façon à être alignés l'un à l'autre le long de la direction transversale (X - X), et peuvent recevoir en eux, dans la même direction transversale (X - X), l'élément d'actionnement (21) pour l'ouverture/la fermeture du robinet.

3. Ensemble formant robinet selon la revendication 1, **caractérisé en ce que** ledit premier élément d'interaction est constitué d'un élément polygonal (140) dont l'intérieur est creux et qui est supporté par un montant vertical (141) raccordé au flotteur (30).

4. Ensemble formant robinet selon la revendication 1, **caractérisé en ce que** ledit premier élément d'interaction est constitué d'un élément formant pont (40).

5. Ensemble formant robinet selon la revendication 1, **caractérisé en ce que** ledit premier élément (40 ; 140) a une hauteur supérieure à celle dudit deuxième élément (50 ; 150).

6. Ensemble formant robinet selon la revendication 1, **caractérisé en ce que** ledit deuxième élément d'interaction est constitué d'un élément polygonal (150) dont l'intérieur est creux et qui est supporté par un montant vertical (151) raccordé au flotteur (30).

7. Ensemble formant robinet selon la revendication 1, **caractérisé en ce que** ledit deuxième élément d'interaction (50) est constitué d'un élément formant pont.

8. Ensemble formant robinet selon la revendication 1, **caractérisé en ce que** ladite marche a une surface intérieure avant (14a) qui est perpendiculaire à la direction transversale (X - X) et des surfaces (14b) qui sont parallèles au plan formé par les directions transversale (X - X) et axiale (Y - Y) et qui sont disposées de chaque côté de l'ouverture du conduit (12) recevant le robinet (20).

9. Ensemble formant robinet selon la revendication 8, **caractérisé en ce que** le capot (10) est pourvu en interne de guides axiaux (13) disposés parallèlement à ladite surface avant (14a) de la marche (14), et à une distance appropriée de celle-ci dans la direction transversale, de façon à former une cavité (15).

10. Ensemble formant robinet selon la revendication 4, **caractérisé en ce que** ledit premier élément formant pont (40) a des montants verticaux (41) ayant une section droite essentiellement en forme de T.

11. Ensemble formant robinet selon la revendication 4, **caractérisé en ce que** ledit premier élément formant pont (40) a des montants verticaux (41) ayant une section droite essentiellement rectangulaire.

12. Ensemble formant robinet selon la revendication 4, **caractérisé en ce que** ledit premier élément formant pont (40) a des montants verticaux (41) ayant une section droite essentiellement circulaire.

13. Ensemble formant robinet selon la revendication 4, **caractérisé en ce que** ledit premier élément formant pont (40) a une pièce transversale (42) ayant une largeur dans la direction transversale (X - X) légèrement plus petite que la largeur de ladite cavité (15), à l'intérieur de laquelle la pièce transversale peut coulisser dans la direction axiale (Y - Y).

14. Ensemble formant robinet selon la revendication 12, **caractérisé en ce que** ladite pièce transversale (42) du premier élément formant pont (40) peut s'appuyer contre ledit robinet (20) pendant son déplacement à l'intérieur de la cavité (15).

15. Ensemble formant robinet selon la revendication 7, **caractérisé en ce que** la pièce transversale (52) dudit deuxième élément formant pont (50) peut interagir avec l'élément d'actionnement (21) du robinet (20) de façon à ouvrir ce dernier.

16. Ensemble formant robinet selon la revendication 1, **caractérisé en ce que** ledit capot (10) a un bord annulaire (17) qui fait saillie vers l'extérieur, et dont la surface supérieure (17a) et la surface inférieure (17b) peuvent former, respectivement, la surface d'appui pour des moyens (70a) servant à retenir le robinet sur le siège associé (80) et pour un élément d'étanchéité (70b).

17. Ensemble formant robinet selon la revendication 16, **caractérisé en ce que** lesdits moyens (70a) pour retenir le robinet sur le siège associé (80) sont constitués d'une fourche élastique en forme de U.

18. Ensemble formant robinet selon la revendication 16, **caractérisé en ce que** ledit élément d'étanchéité (70b) est du type joint torique.

19. Ensemble formant robinet selon la revendication 1, **caractérisé en ce que** lesdits moyens de purge (11) sont parallèles à la direction axiale (Y - Y) du déplacement du flotteur (30).

20. Ensemble formant robinet selon la revendication 1, **caractérisé en ce que** lesdits moyens de purge (111) sont parallèles à la direction transversale (X - X) du déplacement du flotteur (30).

21. Ensemble formant robinet selon la revendication 1, **caractérisé en ce qu'**il comprend des moyens (200) pour purger l'air manuellement.

22. Ensemble formant robinet selon la revendication 21, **caractérisé en ce que** lesdits moyens de purge manuelle (200) comprennent un obturateur (210) formé d'une tige (211) et d'une base (212), ladite tige (211) étant reçue dans un siège ouvert correspondant (220) pouvant relier l'intérieur du capot (10) à l'environnement extérieur.

23. Ensemble formant robinet selon la revendication 22, **caractérisé en ce que** ladite base (212) a une surface conçue pour venir en appui contre le bord intérieur dudit siège (220), de façon à produire une fermeture de celui-ci.

24. Ensemble formant robinet selon la revendication 22, **caractérisé en ce qu'**un ressort (213) est disposé coaxialement à la tige (211) de l'obturateur (210) et peut exercer une action de poussée entre une surface d'appui du siège (220) et une pièce de tête (214) réunie à la tige (211) du côté opposé à la base (212).

25. Ensemble formant robinet selon la revendication 23, **caractérisé en ce qu'**un élément d'étanchéité (215) du type joint torique est disposé entre la base (212) de l'obturateur (200) et le bord intérieur du siège (210).
